# EUROPEAN PATENT APPLICATION

(11) **EP 4 062 766 A1**
(43) Date of publication of application: **28.09.2022**
(21) Application number: 21176090.5
(22) Date of filing: 26.05.2021
(51) Int. Cl.: A23L 11/00, A23L 3/16, A23L 3/3418, A23B 7/005, A23B 7/148

(54) **A METHOD OF MAKING PRESERVATIVE-FREE HUMMUS HAVING IMPROVED SHELF LIFE**

(30) Priority: 23.03.2021 SA 121420586
(71) Applicant: Almarai Company, 11491 Riyadh (SA)
(72) Inventor: OWEN, David Nicholas, 7070 Riyadh (SA); ALATEEG, Omar Taysir, 4322 Alkharj (SA)
(74) Representative: Finnegan Europe LLP

(57) **Abstract**

A traditional method for making, pasteurizing and packaging preservative-free, fresh food product comprising chickpeas, such as hummus that involves a continuous process in which the temperature does not deviate more than 50°C from the cooking step until just prior to packaging. In one embodiment, the method comprises cooking the chickpeas from 110°C to 125°C while under pressure within the closed vessel, which is followed by adding raw ingredients to the cooked chickpeas at a temperature ranging from 75°C to 85°C, which is immediately followed by a pasteurization at a temperature ranging from 70°C to 80°C, such as approximately 75°C. Only after this pasteurization step is the temperature reduced in a multi-step cooling process. A fresh, preservative-free, fresh food product comprising chickpeas, such as hummus made according to the present method is also disclosed.

## Description

### Field of Invention

The present disclosure generally relates to a method of making a preservative-free food product comprising chickpeas, such as hummus, that has extended shelf-life. The present disclosure also relates to a finished food product comprising chickpeas, such as hummus, made by the disclosed method.

### Background

The sales of food products comprising chickpeas, such as hummus, have grown steadily in recent years. While it is native to the Middle East, it has become increasingly popular in North America, Europe and Asia. For example, the global hummus market size is projected to exhibit a compound annual growth rate of 12.8% from 2018-2027. The increase in popularity has encouraged hummus producers to ramp up production and offer a variety of different flavors and toppings. At the same time, changing consumer sentiments towards processed food have required producers to introduce healthy variants, such as organic and preservative-free options. All of this is expected to further increase the global sales of hummus.

Producers know that freshly prepared hummus is prone to spoilage by bacteria. Thus, its shelf life is very short. For example, refrigerated, hummus will last for a few days, and at room temperature it will spoil within hours. It is known that the shelf life of hummus can be extended in a number of ways, including by reducing its pH, such as by adding lemon juice. However, this can result in a bitter taste, and will extend the shelf life by only a short time.

Exposing the finished hummus to extreme thermal or pressure conditions can also extend its shelf life. For example, Ultra-High Temperature (UHT) processes can be used to extend the shelf life of hummus to many months. This is usually performed on the entire hummus product, often heating the hummus that is already sealed in its final package.

Likewise, High Pressure Processing (HPP) can also be used to extend the shelf life of already produced hummus. In this technique, cold pasteurization is performed on a product that is already sealed in its final package by subjecting it to a high isostatic pressure (300-600 MPa) at a temperature below 10°C.

If hummus is pasteurized, the pasteurization typically occurs after it has been transferred from the cooking vessel and just prior to packaging. The literature does not describe a method of making hummus in which the ingredients are pasteurized in the same vessel for cooking and grinding the chickpeas, or as an integral step in making it finished food product. As a result, there is a need for a new simplified method of making preservative-free, fresh food products comprising chickpeas, such as hummus, without using extreme temperatures or pressures to extend its shelf life.

The disclosed method of making preservative-free, fresh food products comprising chickpeas having extended shelf life is directed to overcoming one or more of the problems set forth above and/or other problems of the prior art. More particularly, the disclosed method uses a continuous single pot method of producing a traditional, preservative-free food product comprising chickpeas with a 28 day fresh chilled shelf life with very low micro-load. The present disclosure provides that by using the cooking pot to also pasteurize the food products comprising chickpeas a very cost-efficient and continuous process results.

### Summary

In an embodiment, there is described a method of preparing a traditional, preservative-free food product comprising chickpeas, such as hummus. The continuous method comprises: placing chickpeas that have been previously soaked in water in a vessel configured to cook and blend said chickpeas; cooking the chickpeas in water for less than one hour, such as from 40 to 50 minutes at a temperature ranging from 110°C to 125°C while under pressure that forms in the closed vessel from heating it to 110°C for 50 minutes to form cooked chickpeas; depressurizing and cooling the vessel to a temperature ranging from 75°C to 80°C; adding raw ingredients to the depressurized vessel and mixing said raw ingredients with the cooked chickpeas at a temperature ranging from 75°C to 85°C to form a cooked food product; holding the temperature of the vessel at a temperature ranging from 70°C to 80°C, such as at approximately 75°C for a time ranging from 5-20 minutes to pasteurize the cooked food product; blending and micro-cutting the pasteurized cooked food product to form a finished food product having a smooth consistency and a particle size of less than 10 microns; cooling the finished food product to a temperature ranging from 5°C to 10°C; and transferring the finished food product that is maintained at a temperature ranging from 5°C to 10°C to a container to form a preservative-free food product. The resulting preservative-free food product exhibits total yeast and mold counts of less than 10 CFU/g at 28 days when stored at 2°C to 8°C.

### Brief Description of the Drawings

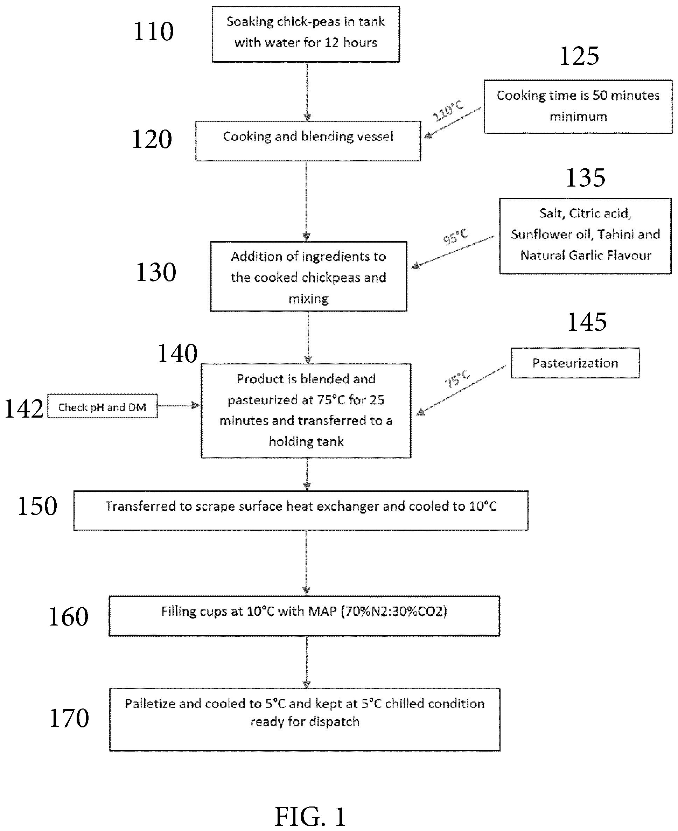

FIG. 1 is a flow diagram of an exemplary process used to make preservative-free fresh hummus having extended shelf life, according to one embodiment of the present disclosure.

### Detailed Description of the Invention

### Definitions

As used herein, "chickpea" is intended to encompass any legume of the family Fabaceae, subfamily Faboideae. Examples of the different varieties encompassed by this invention include the gram or Bengal gram, garbanzo or garbanzo bean, or Egyptian pea.

As used herein "extended shelf life" or "long shelf life" is intended to mean the finished food product has negligible or trace amounts of vegetative flora (bacteria, virus, yeasts, molds and parasites), when measured at 28 days after processing.

As used herein, "negligible or trace amounts of vegetative flora," is intended to mean total yeast and mold counts of less than 50 CFU/g or even less than 10 CFU/g.

As used herein, "Ultra-High Temperature ("UHT") is defined as heating a food product at a temperature above 135°C for a short time. This is typically done to kill bacteria including their spores, so there are no microorganisms left to grow in the product during room temperature storage. Continuous UHT treatment gives a commercial aseptic product which can be stored at room temperature. A UHT processing line requires an aseptic transfer and an aseptic filling machine.

As used herein "High Pressure Processing" (HPP) is defined as a cold pasteurization technique by which products, typically already sealed in its final package, are subjected to a high isostatic pressure (300-600 MPa), typically at low temperatures, e.g., at temperatures ranging from 4°C to 10°C.

As used herein, "pasteurization" is defined as a thermal process that reduces the microbiological load in a food product. Unlike UHT, pasteurization occurs at a much lower temperature, typically ranging from 70°C -75°C. As some bacteria survive the pasteurization process, the final product needs to be stored under refrigerated conditions, such as from 0°C to 5°C, to control the growth rate of bacteria.

External pressure is not applied in the described cooking method. Rather, pressure develops inside the cooking vessel from trapped water molecules that move faster, thereby increasing pressure, with increasing temperature. Therefore, as used herein, "depressurizing" the cooking vessel means releasing the pressure from the cooking vessel that develops from steam within the vessel that cannot escape during cooking.

As used herein, a food "preservative," is defined as a chemical that is added to food to help prevent the growth of fungi and mold. It usually comprises a chemical that does not break down in food, and it has no taste or smell. Non-limiting embodiments of such preservatives are potassium sorbate, sodium benzoate, and potassium benzoate.

As used herein, "preservative-free," is intended to mean a food product that does not contain a preservative, as defined above.

As used herein, "fresh food product comprising chickpeas" and "fresh hummus," are defined as both being preservative-free and being stored under refrigeration, such as above 0°C and below 10°C, such as from 2°C to 8°C for at 28 days with negligible or trace amounts of vegetative flora, as defined above. Fresh food products comprising chickpeas and fresh hummus according to the present disclosure was neither heated above 125°C at any time during the manufacturing or post-manufacturing process, nor exposed to pressures above 300 MPa during the manufacturing or post-manufacturing process. "Fresh" food products comprising chickpeas, such as hummus, further means that the food products comprising chickpeas hummus are made directly from cooked chickpeas, and not from previously frozen chickpeas or a chickpea containing product that was previously cooked and transformed into another form, such as a paste.

As used herein, "headspace," is intended to mean the clearance between the inside top ceiling of a container, such as the film that is vacuum packed to the container, and the top of the contents within the container, such as the food products comprising chickpeas and hummus.

As used herein, a "smooth consistency," is defined as a food product that has a high viscosity, with weak, gel-like properties, such that it can be spread and remains in place without flowing. It is meant to distinguish from a low viscosity liquid that flow rather than spread, and from powdery, granular or rigid solid mass that cannot be spread.

Prior to the present disclosure, there was not a commercial process for making preservative-free food product comprising chickpeas, such as hummus, in which pasteurizing the hummus mixture is performed in the same cooking vessel that was used to cook the chickpeas. The prior art similarly fails to describe a method in which the temperature of the cooking and blending vessel does not vary more than 50°C, such as not more than 45°C, not more than 40°C, or not more than 35°C, in one continuous process from cooking (the chickpeas), to blending (additional raw ingredients) to pasteurization of the food product. This single, continuous method reduces processing time, simplifies processing steps, and mitigates stress and damage on the processing system associated with temperature ramps, all while obtaining a longer-lasting, preservatives-free, and freshly packed food product comprising chickpeas.

In contrast to the present disclosure, the prior art describes fundamentally different methods of making hummus with extended shelf life. In addition to using preservatives in the food product, such as shown in U.S. Published Patent Application No. 2006/286226, which is outside the scope of the claimed invention, typical commercial methods transform one or more of the starting materials to a different state or form to specifically allow it to have an extended shelf life or be stored indefinitely. For example, U.S. Published Patent Application No. 2004/028796 described methods include freezing the soy products to allow it to be stored in a frozen state for a long period of time without using preservatives.

U.S. Published Patent Application No. 2011/020527 describes a method where a paste from which hummus is produced with long shelf life of at least three months at room temperature. The present disclosure does use or rely on a paste or methods of making such as paste, as described in this document. Rather, the disclosed method uses a continuous, single pot method of producing a traditional, preservative-free food product comprising chickpeas with a 28 day fresh chilled shelf life with very low micro-load. Using the cooking pot to both cook the chickpeas and pasteurize the food product comprising chickpeas provides a very cost-efficient and continuous process.

In one embodiment, there is described a method of preparing a preservative-free food product comprising chickpeas. With reference to FIG. 1, the disclosed method (100) comprises placing chickpeas that have been previously soaked in water (110) in a vessel configured to cook and blend the chickpeas (120). The chickpeas are typically soaked in water for 8 to 16 hours, such as 12 hours prior to being added to the vessel for cooking (110).

In an embodiment, the method further comprises cooking the chickpeas in water for less than one hour at a temperature ranging from 110°C to 125°C while under pressure, to form cooked chickpeas (120).

In an embodiment, the method next comprises depressurizing and cooling the vessel to 95°C (130, 135), and eventually to a temperature ranging from 75°C to 85°C, which is followed by adding raw ingredients to the depressurized vessel and mixing the raw ingredients with the cooked chickpeas at a temperature ranging from 75°C to 85°C to form a cooked food product (130). In an embodiment, the raw ingredients that are added to the cooking vessel comprises one or more of the following ingredients: salt, citric acid, vegetable oil, tahini, natural garlic, or garlic flavored compound (135). These ingredients are used to produce a hummus food product.

In an embodiment, the disclosed method next comprises blending and pasteurizing the cooked food product (140) by holding the temperature of the vessel at at a temperature ranging from 70°C to 80°C, such as approximately 75°C for a time ranging from 5 to 20 minutes (145). In this step, the pH can be measured to ensure it is below 6.0, such as a pH ranging from 5.8 to 5.95.

In an embodiment, the blending and micro-cutting the pasteurizing step (140) forms a finished food product having a smooth consistency and particle size of less than 10 microns. For example, blending and micro-cutting the pasteurized cooked food product comprises a continuous process within the cooking vessel for a time ranging from 10 to 20 minutes.

In an embodiment, the disclosed method next comprises cooling the finished food product to a temperature ranging from 5°C to 10°C (150). In an embodiment, cooling the finished food product initially comprises transferring the finished food from the vessel after the blending and micro-cutting step, to a holding tank, and reducing the temperature of the finished food product in the holding tank from 75°C to 60°C. For example, the temperature in the holding tank may be maintained at 60°C for 1 hour or less. In one embodiment, the method of cooling comprises moving the finished food product through a heat exchanger to cool the food product to 10°C.

In another embodiment, the method further comprises transferring the finished food product that is maintained at a temperature ranging from 5°C to 10°C to a container to form a preservative-free food product that has a shelf life of at least 28 days when stored at 2°C to 8°C, as determined by total yeast and mold counts of less than 10 CFU/g for at least 28 days.

In an embodiment, the method comprises transferring the finished food product that has been cooled, as described above, under a nitrogen containing atmosphere (160). This step allows the finished food product to be packed in a container having a nitrogen rich atmosphere when sealed. For example, the nitrogen rich atmosphere further may include carbon dioxide in the following ratio 70% N₂:30% CO₂ (160).

Unlike UHT treatment of similar products that gives a commercial aseptic product which can be stored at room temperature and requires an aseptic transfer and an aseptic filling machine, the same is not true for the disclosed method and resulting product. The disclosed method does not result in a commercial aseptic hummus which can be stored at room temperature for extended times, and it does not require an aseptic transfer and an aseptic filling machine. This greatly simplifies the process of making preservative-free, fresh food products comprising chickpeas, such as hummus, with an extended shelf life. In particular the method described herein produces a food product comprising chickpeas, such as hummus, which contains no preservatives, and has a life of at least 28 days when stored at 2°C to 8°C, as determined by total yeast and mold counts of less than 10 CFU/g, such as less than 10 CFU/g for at least 28 days.

There is also described herein a method of making a packaged, preservative-free food product comprising chickpeas. In this embodiment, the method comprises transferring the finished food product made as described herein and that is maintained at a temperature ranging from 5°C to 10°C to a container. The method further comprises vacuum sealing the container with a top sealing layer to form a headspace between the food product comprising chickpeas and the top sealing layer, the headspace containing a nitrogen rich atmosphere, wherein the packaged, preservative-free hummus product has a life of at least 28 days when stored at 2°C to 8°C, as determined by total yeast and mold counts of less than 10 CFU/g for at least 28 days.

As described herein, the present disclosure provides a traditional process for making, pasteurizing, and packaging preservative-free, fresh food products comprising chickpeas, such as hummus, that involves a continuous process in which the temperature does not deviate more than 50°C, such as not more than 45°C, not more than 40°C, or not more than 35°C, from the cooking step until just prior to packaging. In one embodiment, the inventive process comprises cooking the chickpeas from 110°C to 125°C while under pressure, which is followed by adding raw ingredients to the cooked chickpeas at a temperature ranging from 75°C to 80°C, which is immediately followed by a pasteurization at a temperature ranging from 70°C to 80°C, such as approximately 75°C. Only after this pasteurization step is the temperature reduced in a multi-step cooling process.

### Modified Atmosphere Packaging

In one embodiment, the packaging step described herein adjusts the ambient atmosphere surrounding the food by removing some of the oxygen and replacing it with a mixture of carbon dioxide and nitrogen. This process maintains the freshness, longevity and appearance of the hummus for extended periods by shielding it from oxygen and outside moisture. Oxygen is prevented from prematurely aging the hummus and moisture is precluded from the packaging, thereby reducing the growth of bacteria which could lead to spoilage of the hummus.

It has been discovered that by removing or reducing the oxygen content in the package food product, reactions between oxygen molecules and the fatty lipids in food is reduced or eliminated. Similarly, enzymes that naturally occur in food can oxidize when exposed to oxygen for a long period of time. The reduction or elimination of the lipid reactions and enzymes reduce the early onset of spoilage. In one embodiment, not all of the oxygen from the packaging is removed from the headspace of the food packaging container. Rather, the headspace in the container may contain between 0.5% - 2.5% oxygen, with the remaining atmosphere replaced with a nitrogen rich atmosphere. In one embodiment, the nitrogen rich atmosphere further includes carbon dioxide in the following ratio 70% N₂:30% CO₂.

The present disclosure provides that when the headspace atmosphere comprises a carbon dioxide and nitrogen mixture, hummus spoilage is significantly reduced. This atmosphere is maintained in the container headspace by a vacuum sealing process that creates an airtight seal around the fresh hummus and the nitrogen rich atmosphere. Thus, the fresh product products comprising chickpeas, such as hummus, will not be susceptible to outside contaminants, oxygen molecules, or microorganisms after it is sealed. In one embodiment, a film, such as a clear plastic film, is used in the vacuum sealing process.

In order for the modified atmosphere to be effective, the film used to seal, for example, a hummus-filled container must comprise a barrier film to ensure no diffusion of gas through the film and packaging throughout shelf life, therefore maintaining the low microbial growth, such as almost no growth for about 28 days after filling. Non-limiting embodiments of the plastic film that might be used to seal the hummus container include: Low-density polyethylene (LDPE); Polypropylene (PP); Polyvinyl chloride (PVC); and Amorphous polyethylene terephthalate and polyethylene terephthalate (APET/PET).

The following provides a non-limiting list of food-grade plastics that can be used as the container for holding the disclosed hummus: Polyethylene Terephthalate (PET); Crystallizable Polyethylene Terephthalate (CPET); Polypropylene (PP); High-density polyethylene (HDPE); Polyvinylidene Chloride (PVDC); and Polyamide/Nylon.

In other embodiments, the container for holding the disclosed hummus comprises eco-friendly options, such as containers comprising natural fibers and being biodegradable. Non-limiting examples of such food containers include molded fiber or simple corrugated board articles, with or without barrier coatings.

### Microbiological Testing and Parameters

Samples of hummus were made according to the process described in FIG. 1, including blending and pasteurizing the hummus at 75°C for 25 minutes. The resulting hummus had a solids content of 33.9% and a pH of 5.91. Microbiological testing on samples that were cooled to 5°C showed a total aerobic plate count of less than 10 CFU/g.

The process described above was repeated to make a sample of hummus according to the process described in FIG. 1, however, blending of the hummus was conducted at 60°C for 25 minutes not at 75°C. The resulting hummus had a solids content of 35% and a pH of 5.88. Microbiological parameters tested on this sample when cooled to 5°C showed a total aerobic plate count of 910 CFU/g.

The above comparative testing illustrates the beneficial effect of the method according to the present disclosure which leads to a lower aerobic plate count and a total yeast and mold counts of less than 10 CFU/g. More generally, the microbiological parameters of hummus made according to the present disclosure should fall within the parameters outlined in Table 1 at 28 days after production.

**Table 1**

| **Analyte** | **CFU/g** |
|---|---|
| Coliform | <10 |
| Salmonella | N/A |
| Total Bacterial Counts | <100 |
| Total Aerobic Plate Count | <100 |
| Total Yeast and Mold Count | <10 |
| Yeast | <10 |
| Mold | <10 |
| Staphylococcus Aureus | <10 |

### Industrial Applicability

As described above, the method disclosed herein is commercially significant in that it is directed to a continuous process that is based on traditional cooking step to produce preservative-free food product comprising chickpeas, such as hummus, with a 28 day fresh chilled shelf life, as determined by having a very low micro-load over this period. The inventive process uses a cooking pot to pasteurize the food product comprising chickpeas in a very cost-efficient and continuous process. The disclosed continuous process is unlike those of the prior art in that the temperature of the cooking vessel, and the ingredients therein, are kept within a particularly defined temperature range from cook to fill.

By not requiring high temperatures or pressures, and by keeping the entire cooking and pasteurizing process within a narrowly defined temperature range, the disclosed process is further deemed commercially important because it is shorter than known processes, and does not require equipment that takes up unnecessary factory space or require the input of an excessive amount of energy needed by other techniques used to produce food products comprising chickpeas, such as hummus, on a commercial scale, such as Ultra-High Temperature and High Pressure Processing.

In another embodiment there is described a food package comprising a container which includes fresh food product comprising chickpeas that has no preservatives and exhibits total yeast and mold counts of less than 10 CFU/g at 28 days when stored at 2°C to 8°C. In a further embodiment, the food product comprising chickpeas is hummus.

In an embodiment, the fresh food product comprising chickpeas in the food package has the following microbiological composition even at 28 days after it is produced: coliform <10 CFU/g; total bacterial counts <100 CFU/g; total aerobic plate count <100 CFU/g; Yeast <10 CFU/g; Mold <10 CFU/g; and Staphylococcus aureus <10CFU/g. In a further embodiment, the food product comprising chickpeas is hummus.

In an embodiment, the fresh food product comprising chickpeas, which comprises one or more of the following ingredients: salt, citric acid, vegetable oil, tahini, natural garlic, or garlic flavored compound, was transferred into the container at a temperature ranging from 5°C to 10°C.

In an embodiment, the fresh hummus, which comprises one or more of the following ingredients: salt, citric acid, vegetable oil, tahini, natural garlic, or garlic flavored compound, was transferred into the container at a temperature ranging from 5°C to 10°C.

To help maintain the freshness of the food products comprising chickpeas, such as hummus, described herein, the container for holding the fresh food product comprising chickpeas includes a top layer for sealing said container, such as a plastic film. In one embodiment, the plastic film for the top layer of the container comprises low-density polyethylene (LDPE); polypropylene (PP), polyvinyl chloride (PVC), amorphous polyethylene terephthalate and polyethylene terephthalate (APET/PET), and combinations thereof.

In an embodiment, the food package container described herein further comprises a headspace between the food product comprising chickpeas and the top layer, wherein the headspace comprises a modified atmosphere which is nitrogen rich, such as 70% N₂:30% CO₂.

In an embodiment, the food package container comprises a food-grade plastic. Non-limiting examples of the food-grade plastic that can be used in the disclosed container includes Polyethylene Terephthalate (PET); Crystallizable Polyethylene Terephthalate (CPET); Polypropylene (PP); High-density polyethylene (HDPE); Polyvinylidene Chloride (PVDC); and Polyamide/Nylon.

In an embodiment, the food package container is biodegradable, such as comprising a molded fiber article, or a corrugated board. The biodegradeable container may further comprise a barrier coating.

It will be apparent to those skilled in the art that various modifications and variations can be made to the disclosed food product comprising chickpeas, method of making the food product comprising chickpeas, methods of packaging the food product comprising chickpeas, as well as the finished packaged food product comprising chickpeas without departing from the scope of the disclosure. Alternative implementations will be apparent to those skilled in the art from consideration of the specification and practice disclosed herein. It is intended that the specification and examples be considered as exemplary only, with a true scope of the disclosure being indicated by the following claims and their equivalents.

## Claims

1. A method of preparing a preservative-free food product comprising chickpeas, said method comprising:
placing chickpeas that have been previously soaked in water in a vessel configured to cook and blend said chickpeas;
cooking the chickpeas in water for less than one hour at a temperature ranging from 110°C to 125°C while under pressure, to form cooked chickpeas;
depressurizing and cooling the vessel to a temperature ranging from 75°C to 85°C
adding raw ingredients to the depressurized vessel and mixing said raw ingredients with the cooked chickpeas at a temperature ranging from 75°C to 85°C to form a cooked food product;
pasteurizing the cooked food product by holding the temperature of the vessel at approximately 75°C for a time ranging from 5 - 20 minutes;
blending and micro-cutting the pasteurized cooked food product to form a finished food product having a smooth consistency and particle size of less than 10 microns;
cooling the finished food product to a temperature ranging from 5°C to 10°C; and
transferring the finished food product that is maintained at a temperature ranging from 5°C to 10°C to a container to form a preservative-free food product exhibits total yeast and mold counts of less than 10 CFU/g at 28 days when stored at 2°C to 8°C.

2. The method of claim 1, wherein cooling the finished food product initially comprises transferring the finished food from the vessel after the blending and micro-cutting step, to a holding tank, and reducing the temperature of the finished food product in the holding tank from 75°C to 60°C.

3. The method of claim 2, wherein the temperature in the holding tank is maintained at 60°C for 1 hour or less.

4. The method of claim 3, further comprising moving the finished food product through a heat exchanger to cool the food product to 10°C.

5. The method of claim 1, wherein the chickpeas are soaked in water for 8 to 16 hours prior to being added to the vessel for cooking.

6. The method of claim 5, wherein the chickpeas are soaked in water for 12 hours.

7. The method of claim 1, wherein the temperature of the cooking and blending vessel does not vary more than 45°C until cooling.

8. The method of claim 1, wherein the temperature of the cooking and blending vessel does not vary more than 35°C until cooling.

9. The method of claim 1, wherein blending and micro-cutting of the pasteurized cooked food product comprises a continuous process within the cooking vessel for a time ranging from 10-20 minutes.

10. The method of claim 1, wherein said transferring of the finished food product is performed under a nitrogen containing atmosphere to allow the finished food product to be packed in a container having a nitrogen rich atmosphere when sealed.

11. The method of claim 10, wherein the nitrogen rich atmosphere comprises 70% N₂:30% CO₂.

12. The method of claim 10, wherein the container is sealed with a plastic film.

13. The method of claim 12, wherein the plastic film is transparent.

14. The method of claim 1, wherein the raw ingredients comprise one or more of the following ingredients: salt, citric acid, vegetable oil, tahini, natural garlic, or garlic flavored compound.

15. The method of claim 14, wherein the food product is hummus.

16. A fresh hummus which contains no preservatives and exhibits total yeast and mold counts of less than 10 CFU/g at 28 days when stored at 2°C to 8°C.

17. The fresh hummus of claim 16, which has the following microbiological composition at 28 days after it is produced: coliform <10 CFU/g; total bacterial counts <100 CFU/g; total aerobic plate count <100 CFU/g; Yeast <10 CFU/g; Mold <10 CFU/g; and Staphylococcus aureus <10CFU/g.

18. The fresh hummus of claim 16, further comprising one or more of the following ingredients: salt, citric acid, vegetable oil, tahini, natural garlic, or garlic flavored compound.

19. A fresh hummus made by the method of claim 1, wherein said fresh hummus contains no preservatives and exhibits total yeast and mold counts of less than 10 CFU/g at 28 days when stored at 2°C to 8°C.

20. The fresh hummus of claim 19, which has the following microbiological composition at 28 days after it is produced: coliform <10 CFU/g; total bacterial counts <100 CFU/g; total aerobic plate count <100 CFU/g; Yeast <10 CFU/g; Mold <10 CFU/g; and Staphylococcus aureus <10CFU/g.

21. The fresh hummus of claim 19, further comprising one or more of the following ingredients: salt, citric acid, vegetable oil, tahini, natural garlic, or garlic flavored compound.
